# EUROPÄISCHE PATENTSCHRIFT

(11) **EP 0 520 143 B1**
(45) Veröffentlichungstag und Bekanntmachung des Hinweises auf die Patenterteilung: **28.09.1994**
(21) Anmeldenummer: 92104736.1
(22) Anmeldetag: 19.03.1992
(51) Int. Cl.: F16F 13/00, F16F 3/08, B60K 5/12

(54) **Steuerbares Motorlager**
Controllable engine mount
Support de moteur réglable

(30) Priorität: 25.06.1991 DE 4120841
(43) Veröffentlichungstag der Anmeldung: 30.12.1992
(73) Patentinhaber: Firma Carl Freudenberg, 69469 Weinheim (DE)
(72) Erfinder: Winkler, Gerold, W-6943 Birkenau (DE); Ticks, Gerd-Heinz, W-6948 Waldmichelbach (DE); Schmitt, Ludwig, W-6943 Birkenau (DE)

(56) Entgegenhaltungen:
- EP-A- 0 119 626
- EP-A- 0 480 460
- DE-A- 3 403 002
- GB-A- 2 165 027

## Beschreibung

Die Erfindung betrifft ein steuerbares Motorlager, bestehend aus einem Traglager und einem Auflager, die parallel zueinander durch ein erstes, aus Gummi bestehendes und ringförmig gestaltetes Federelement und ein zweites Federelement aus Gummi aufeinander abgestützt sind, wobei eines der Federelement durch ein Hilfsmittel bedarfsweise blockierbar ist.

Ein solches Motorlager ist aus der DE-C-34 03 002 bekannt. Danach beruht die Funktion des Lagers auf dem Zusammenwirken zweier Federelemente mit unterschiedlicher Federcharakteristik und einer Schaltkupplung. Die elektromagnetisch betätigbare Schaltkupplung ist mit dem relativ härteren Federelement in Serie geschaltet und diese Einheit ist parallel zu dem relativ weicheren Federelement angeordnet. Bei unbetätigter Schaltkupplung werden höherfrequente Schwingungen mit kleinen Amplituden von dem relativ weicheren Federelement isoliert. Bei betätigter Schaltkupplung ergibt sich eine zusammengesetzte Federcharakteristik aus den durch die Schaltkupplung verbundenen Federelementen zur Dämpfung niedrig frequenter Schwingungen mit großen Amplituden.

Dabei ist allerdings zu beachten, daß das Motorlager einen komplizierten inneren Aufbau, bestehend aus vielen zu befestigenden Einzelteilen aufweist und daher in wirtschaftlicher Hinsicht wenig befriedigend ist. Auch die großen Abmessungen in axialer Richtung und das hohe Gewicht des montierten Motorlagers sind, konstruktionsbedingt, nachteilig.

Der Erfindung liegt die Aufgabe zugrunde, ein Motorlager der eingangs genannten Art derart weiterzuentwickeln, daß Schwingungen kleiner Amplituden gut isoliert und große Relativbewegungen zwischen dem Traglager und dem Auflager vermieden werden, das Lager dabei jedoch einfacher, mit weniger Teilen und wirtschaftlicher herstellbar ist und gleichzeitig geringere Abmessungen und weniger Gewicht aufweist.

Diese Aufgabe wird erfindungsgemäß mit den Merkmalen des Anspruchs 1 gelöst. Auf vorteilhafte Ausgestaltung nehmen die Unteransprüche bezug.

Bei dem erfindungsgemäßen steuerbaren Motorlager ist gemäß den kennzeichnenden Merkmalen des Anspruchs 1 vorgesehen, daß das erste Federelement einen Innendurchmesser aufweist, der größer ist als der Außendurchmesser des zweiten Federelementes, daß das erste Federelement das zweite Federelement in axialer Richtung zumindest teilweise überlappt, daß das Hilfsmittel aus einem Stützelement besteht, das das zweite Federelement zumindest teilweise mit einem radialen Abstand umschließt und daß das zweite Federelement einen Hohlraum aufweist, der eine mit dem Stützelement im wesentlichen übereinstimmende Ausdehnung und Lage in axialer Richtung aufweist, daß in den Hohlraum oder in den Raum, gebildet in dem genannten radialen Abstand zwischen Stützelement und dem zweiten Federelement ein fließfähiges Medium einspeisbar ist und daß das zweite Federelement in Abhängigkeit von dem jeweiligen Druck des Mediums im Bereich des Hohlraumes aufblähbar und unverrückbar an das Stützelement anlegbar ist.

Durch die im wesentlichen konzentrische Anordnung der beiden Federelemente weist das Lager geringe Abmessungen sowohl in axialer als auch in radialer Richtung auf. Das teilearme, steuerbare Motorlager isoliert höher frequente Schwingungen mit kleinen Amplituden dadurch, daß das zweite Federelement im Bereich des Hohlraumes nicht vollständig an der Umfangswandung des Stützelementes anliegt und so eine weichere Gesamtfedercharakteristik des Lagers bedingt.

Beim Befahren unebener Straßen oder beim Überfahren von Bordsteinkanten, wenn große Relativbewegungen zwischen Traglager und Auflager entstehen, wird durch das Einbringen eines druckbeaufschlagten, fließfähigen Mediums ein relativer Überdruck im Hohlraum des zweiten Federelementes erzeugt. Das zweite Federelement legt sich dann im Bereich des Hohlraumes an das benachbarte Stützelement an und verhärtet so die Gesamtfedercharakteristik des Lagers. Die auf das Lager einwirkende Kraft wird im wesentlichen nur noch durch das zweite Federelement mit dem druckbeaufschlagten Hohlraum aufgenommen. Auf diese Weise werden niedrigfrequente Schwingungen mit großen Amplituden wirkungsvoll gedämpft. Eine Feinabstimmung der Federcharakteristik ist durch die verwendeten Materialien für das erste und das zweite Federelement zu erzielen. Dabei besteht die Möglichkeit, daß die Werkstoffe des ersten und des zweiten Federelementes gleich oder unterschiedlich beschaffen sind.
Der Öffnungsquerschnitt des Hohlraumes des zweiten Federelementes muß möglichst groß gewählt werden, so daß keine Resonanzschwingung der Fluidsäule in der Leitung erzeugt wird. Als druckbeaufschlagbares, fließfähiges Medium kann sowohl ein Fluid, als auch Gas zur Anwendung gelangen. Das Stützelement kann aus einer unnachgiebigen Hülse bestehen.

Das fließfähige Medium kann mit einem den atmosphärischen Druck übersteigenden Druck beaufschlagt werden. Die Beaufschlagung des Hohlraumes des zweiten Federelementes mit relativem Überdruck bietet sich insbesondere dann an, wenn als Steuermedium ein Fluid verwendet wird. Zur Dämpfung großer Auslenkbewegungen zwischen Traglager und Auflager, wie sie beispielsweise beim Überfahren von Bordsteinkanten entstehen, wird das Fluid unter Druck über eine Leitung in den Hohlraum des zweiten Federelementes eingebracht. Dadurch, daß sich das zweite Federelement dann unverrückbar an das Stützelement anlegt, durch die Inkompressibilität des Fluids und durch die parallel geschalteten beiden Federelemente, ergibt sich eine vergleichsweise harte Federcharakteristik. Sollen anschließend wieder höherfrequente Schwingungen mit kleineren Amplituden isoliert werden, ist es lediglich nötig, den Druck aus dem Hohlraum, beispielsweise über ein Hydraulikventil, entweichen zu lassen.

Das Medium kann auch mit einem den atmosphärischen Druck unterschreitenden Druck beaufschlagt werden. Das zweite Federelement ist, insbesondere im Bereich des Hohlraumes, schrumpfbar und von dem Stützelement zumindest teilweise entfernbar. Dieses Verfahren ist von Vorteil, wenn ein gasförmiges Steuermedium verwendet wird. Das zur Steuerung nötige Gasventil ist ein preiswertes Bauteil, was der Gesamtwirtschaftlichkeit des Lagers zugute kommt. Durch die Beaufschlagung des Hohlraumes des zweiten Federelementes mit Unterdruck wird diese nach innen eingebeult und ihre Steifigkeit weiter verringert. Auch eine Beaufschlagung des Raumes zwischen dem ersten und dem zweiten Federelement mit Unterdruck ist denkbar. Dann ist es allerdings erforderlich, daß das Stützelement in dem das zweite Federelement angeordnet ist, mit Ausnehmungen, beispielsweise mit Bohrungen versehen ist. Durch das Anlegen eines relativen Unterdrucks im Vergleich zu dem Druck, der in den Hohlraum des zweiten Federelementes besteht, legt sich das zweite Federelement im Bereich des Hohlraumes an die Umfangswandung des Stützelementes an. Dabei ist allerdings zu beachten, daß sich auch das erste Federelement radial in Richtung des zweiten Federelementes verformt.

Ist der Hohlraum im zweiten Federelement mit Unterdruck beaufschlagbar, muß ebenfalls auf eine ausreichende Größe geachtet werden, daß die Gassäule nicht in Resonanzschwingungen gerät. Sollen große Schwingungsamplituden gedämpft werden, muß der Hohlraum im zweiten Federelement mit Überdruck beaufschlagt werden. Dann legt sich, wie bereits beschrieben, das zweite Federelement im Bereich seines Hohlraumes an das Stützelement an und verhärtet die Gesamtfedercharakteristik des Lagers.

Gemäß einer vorteilhaften Ausgestaltung ist es vorgesehen, daß das Stützelement das zweite Federelement einerseits topfförmig untergreift und mit einer Umfangswandung versehen ist, die im Bereich eines Teiles des vorstehenden Endes zylindrisch in ihrem Durchmesser aufgeweitet ist. Diese Ausführung der Hülse erlaubt eine gute Abdichtung der Ausnehmung des zweiten Federelementes im Bereich der Zuführung des fließfähigen Mediums und eine zusätzliche Abstützung bei Druckbeaufschlagung und hohen, stoßartigen Belastungen des Lagers.

Als besonders vorteilhaft hat es sich erwiesen, wenn die axiale Ausdehnung des zylindrisch in seinem Durchmesser aufgeweiteten Abschnittes etwa 0,3 bis 0,5 mal so groß ist, wie die axiale Länge des Stützelementes. Dadurch liegt das Federelement, selbst wenn der Hohlraum mit Unterdruck beaufschlagt wird, zumindest teilweise noch an der Umfangswandung des Stützelementes an.

Das erste Federelement umschließt das zweite Federelement ringförmig. Derart gestaltete Motorlager zeichnen sich durch gute Gebrauchseigenschaften, einfache Herstellbarkeit und geringe Abmessungen in axialer und radialer Richtung aus. Vorteilhaft darüberhinaus ist, daß der gesamte Innenbereich des Lagers, der aus dem Stützelement, dem zweiten Federelement und der Ausnehmung besteht, gegen äußere Einflüsse gut geschützt ist. Diese Ausgestaltung bewirkt eine außerordentlich hohe Gebrauchsdauer des Lagers.

Darüberhinaus kann es vorgesehen sein, daß das erste Federelement in einer tonnenförmigen Gestalt erzeugt ist. Durch dieses Merkmal kann die Zug- und Druckstufe der Federcharakteristik zusätzlich beeinflußt werden.Außerdem wirken auf das erste Federelement bei Ausfederbewegungen in axialer Richtung keine oder nur geringe mechanische Zugbelastungen, wodurch die Gebrauchsdauer des Lagers erhöht wird.

Gemäß einer weiteren, vorteilhaften Ausgestaltung, ist es vorgesehen, daß das Stützelement durch das erste Federelement gebildet werden kann. Hierbei ist von Vorteil, daß das Lager aus besonders wenigen Teilen besteht. Wird der Hohlraum zum Dämpfen großer Schwingungsamplituden mit Druck beaufschlagt, legt sich die Umfangswandung des zweiten Federelementes an die Innenfläche des ersten Federelementes an, wodurch sich eine Verhärtung des Gesamtfedercharakteristik ergibt. Dieses Lager zeichnet sich durch besonders einfachen Aufbau und eine besonders wirtschaftliche Herstellbarkeit aus und ist daher bevorzugt für den Bereich der Großserienfertigung vorgesehen.

Der Gegenstand der Erfindung wird nachfolgend anhand der in der Anlage beigefügten Zeichnungen weiter verdeutlicht. Es zeigen jeweils in geschnittener Darstellung:
Die Fig. 1, 3 und 5 ein erfindungsgemäßes Lager zur Isolierung höher frequenter Schwingungsamplituden und
die Fig. 2, 4 und 6 die in den Fig. 1, 3 und 5 dargestellten Lager unter Betätigung der Druckbeaufschlagung zur Dämpfung großer Schwingungsamplituden.

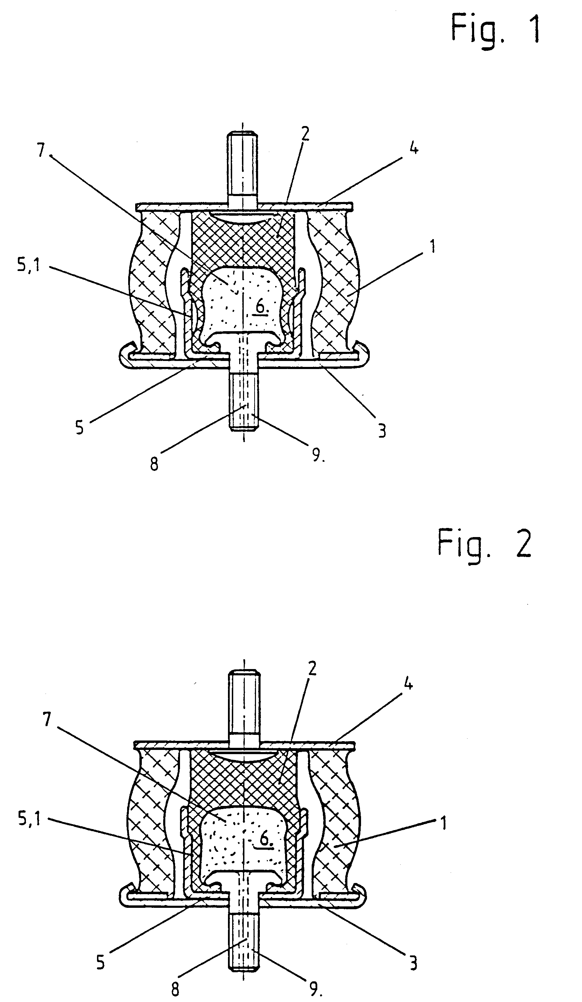

Fig. 1 und 2 ein Motorlager im wesentlichen bestehend aus einem Traglager, einem Auflager, zwei Federelementen und einem Stützelement, das als Hülse ausgebildet ist.

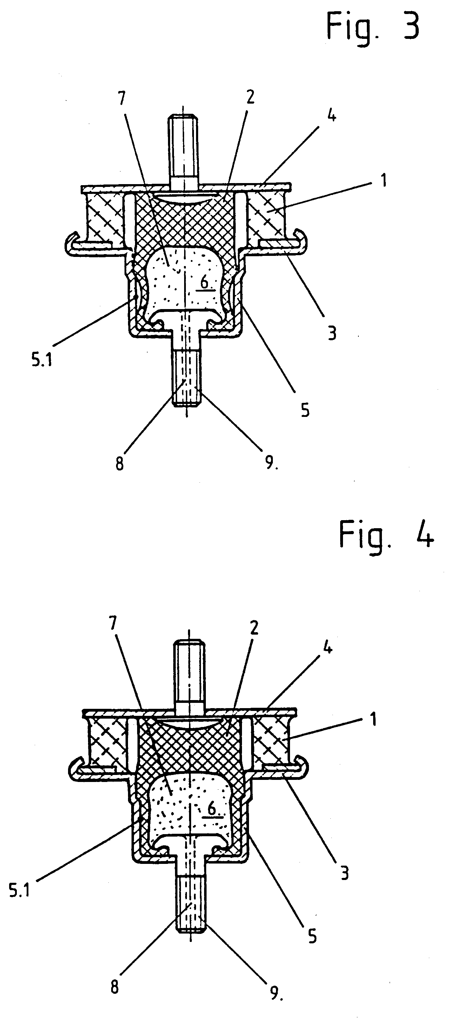

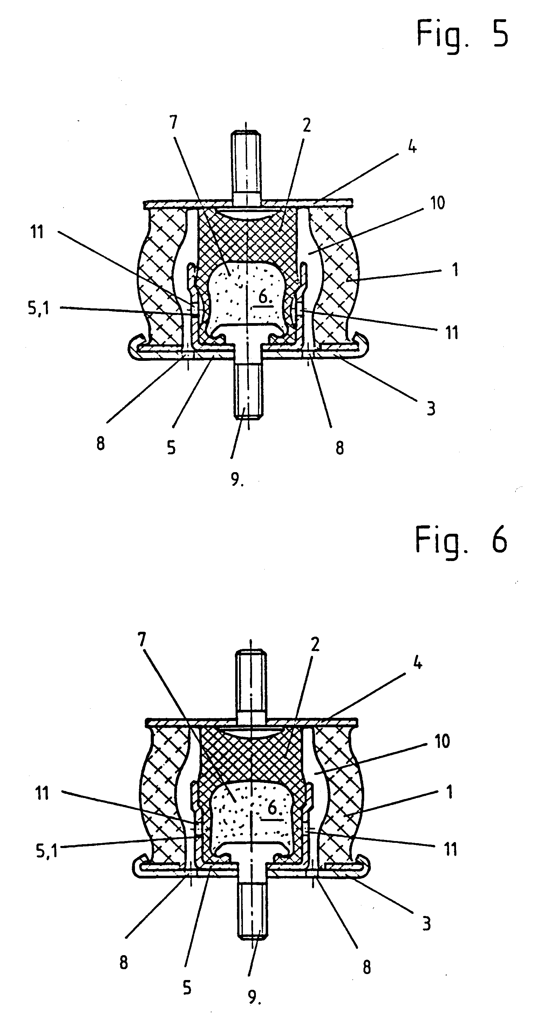

Fig. 3 und 4 ein Motorlager, bei dem das Traglager und die Hülse einstückig ausgeführt sind.
Fig. 5 und 6 ein Motorlager, ähnlich dem Lager aus Fig. 1 und 2 jedoch mit anderer Druckbeaufschlagung.

Das in Fig. 1 dargestellte Motorlager besteht im wesentlichen aus einem Traglager 3, einem Auflager 4 sowie zwei Federelementen 1, 2 wobei das erste Federelement 1 ringförmig gestaltet ist und einen Innendurchmesser aufweist, der größer ist als der Außendurchmesser des zweiten Federelementes 2.

Das zweite Federelement 2 weist einen Hohlraum 6 auf, der mit einem Steuermedium 7 über eine Zuleitung 8 befüllbar ist. Gemäß einer vorteilhaften Ausgestaltung ist es vorgesehen, daß die Zuleitung 8 einen Bestandteil eines Befestigungselementes 9 bildet. Das Steuermedium 7 kann zur Betätigung des Motorlagers sowohl flüssig als auch gasförmig sein. Ist das Steuermedium flüssig, wird der Hohlraum 6 wie in Fig. 1 dargestellt nicht mit Druck beaufschlagt, wodurch das zweite Federelement 2 im Bereich seines Hohlraumes 6 nur teilweise an dem Stützelement 5 anliegt. Wird als Steuermedium Gas verwendet, so kann der Hohlraum 6 zur weiteren Reduzierung der Federsteifigkeit über die Zuleitung 8 des Verbindungselementes 9 mit Unterdruck beaufschlagt werden.

Fig. 2 entspricht dem Lager aus Fig. 1 wobei der Hohlraum 6 des Federelementes 2 zur Dämpfung großer Schwingungsamplituden unter Beaufschlagung mit Überdruck vollständig an der Umfangswand 5.1 des Stützelementes 5 anliegt. Auch in diesem Fall kann als Steuermedium sowohl eine Flüssigkeit als auch ein gasförmiges Medium verwendet werden. Es kann ein flüssiges, inkompressibles Medium verwendet werden.

Die Fig. 3 und 4 bilden das in den Fig. 1 und 2 dargestellte Lager in der Weise weiter, daß das Traglager 3 und das Stützelement 5 einstückig ausgeführt sind. Durch diese Ausführung ergeben sich geringere Abmessungen insbesondere in radialer Richtung. Fig. 3 stellt, wie das Motorlager in Fig. 1, das erfindungsgemäße Motorlager dar, dessen Steuermedium 7 ohne Überdruckbeaufschlagung oder, falls das Steuermedium 7 gasförmig ist, mit Unterdruckbeaufschlagung in dem Hohlraum 6 des zweiten Federelementes 2 enthalten ist.

Das hier dargestellte Lager weist, im Vergleich zum druckbeaufschlagten Lager aus Fig. 4, eine vergleichsweise geringere Federsteifigkeit in axialer Richtung auf, wodurch sich höherfrequente Schwingungen mit kleinen Amplituden in ausgezeichneter Weise isolieren lassen.

Fig. 4 zeigt das in Fig. 3 dargestellte Lager zur Dämpfung großer Schwingungsamplituden. Dabei wird durch die Zuleitung 8 im Befestigungselement 9 ein Steuermedium 7 unter Überdruck in den Hohlraum 6 des zweiten Federelementes 2 gebracht. Das zweite Federelement 2 legt sich unter dem Überdruck in dem Hohlraum 6 an die Umfangswandung 5.1 des Stützelementes 5 an, wodurch sich im Vergleich zu der in Fig. 3 dargestellten Ausführung eine wesentliche Verhärtung der Gesamtfedercharakteristik ergibt und große Schwingungsamplituden einwandfrei gedämpft werden.

Die Fig. 5 und 6 sind im wesentlichen mit den Motorlagern aus den Fig. 1 und 2 identisch. Sie unterscheiden sich lediglich durch eine andere Zuführung des Steuermediums. Sowohl in Fig. 5 als auch in Fig. 6 ist vorgesehen, daß das Steuermedium über die Zuleitung 8 in den Ringraum 10 einbringbar ist. Die hier dargestellten Lager eignen sich insbesondere für die Verwendung eines gasförmigen Steuermediums. Dabei ist vorgesehen, daß zur Isolierung höher frequenter Schwingungen und kleiner Amplituden das Lager wie in Fig. 5 dargestellt über die Zuleitung 8 entweder mit Überdruck oder Atmosphärendruck druckbeaufschlagt wird. Über die Ausnehmungen 11 in der Umfangswandung 5.1 des Stützelementes 5 wird der Federkörper 2 im Bereich seines Hohlraumes 6 in radialer Richtung eingeschnürt, wodurch sich eine weiche Gesamtfedercharakteristik ergibt. Das Befestigungselement 9 hat bei dieser Ausführung, im Gegensatz zu den Ausführungen von Fig. 1 bis Fig. 4 nicht die Funktion einer Zuleitung.

Sollen große Schwingungsamplituden gedämpft werden, wird der Federkörper 2 im Bereich seines Hohlraumes 6 durch einen relativen Unterdruck, der durch die Zuleitung 8 und die Öffnungen 11 auf den Federkörper 2 wirkt an die Umfangswand 5.1 des Stützelementes 5 gezogen, wodurch sich, wie auch bei den Lagern aus Fig. 2 und 4, eine Verhärtung der Gesamtfedercharakteristik ergibt.

## Patentansprüche

1. Steuerbares Motorlager, bestehend aus einem Traglager (3) und einem Auflager (4), die parallel zueinander durch ein erstes, aus Gummi bestehendes und ringförmig gestaltetes Federelement (1) und ein zweites Federelement (2) aus Gummi aufeinander abgestützt sind, wobei eines der Federelemente durch ein Hilfsmittel (5) bedarfsweise blockierbar ist, dadurch gekennzeichnet, daß das erste Federelement (1) einen Innendurchmesser aufweist, der größer ist als der Außendurchmesser des zweiten Federelemtes (2), daß das erste Federelement (1) das zweite Federelement (2) in axialer Richtung zumindest teilweise überlappt, daß das Hilfsmittel aus einem Stützelement (5) besteht, das das zweite Federelement (2) zumindest teilweise mit einem radialen Abstand umschließt und daß das zweite Federelement (2) einen Hohlraum (6) aufweist, der eine mit dem Stützelement (5) im wesentlichen übereinstimmende Ausdehnung und Lage in axialer Richtung aufweist, daß in den Hohlraum (6) oder in den Raum, gebildet in dem genannten radialen Abstand zwischen Stützelement (5) und dem zweiten Federelement (2), ein fließfähiges Medium (7) einspeisbar ist und daß das zweite Federelement (2) in Abhängigkeit von dem jeweiligen Druck des Mediums (7) im Bereich des Hohlraumes (6) aufblähbar und unverrückbar an das Stützelement (5) anlegbar ist.

2. Motorlager nach Anspruch 1, dadurch gekennzeichnet, daß das Stützelement (5) aus einer unnachgiebigen Hülse besteht.

3. Motorlager nach Anspruch 1, dadurch gekennzeichnet, daß das fließfähige Medium (7) mit einem den atmosphärischen Druck übersteigenden Druck beaufschlagbar ist.

4. Motorlager nach Anspruch 1, dadurch gekennzeichnet, daß das Medium (7) mit einem den atmosphärischen Druck unterschreitenden Druck beaufschlagbar ist und daß das zweite Federelement (2) hierdurch schrumpfbar und von dem Stützelement (5) zumindest teilweise entfernbar ist.

5. Motorlager nach Anspruch 1 bis 4, dadurch gekennzeichnet, daß das Stützelement (5) das zweite Federelement (2) einerseits topfförmig untergreift und mit einer Umfangswandung (5.1) versehen ist, die im Bereich eines Teiles des vorstehenden Endes zylindrisch in ihrem Durchmesser aufgeweitet ist.

6. Motorlager nach Anspruch 5, dadurch gekennzeichnet, daß die axiale Ausdehnung des zylindrisch in seinem Durchmesser aufgeweiteten Abschnittes etwa 0,3 - 0,5 mal so groß ist, wie die axiale Länge des Stützelementes (5).

7. Motorlager nach einem der Ansprüche 1 bis 6, dadurch gekennzeichnet, daß das erste Federelement (1) eine tonnenförmige Gestalt aufweist.

8. Motorlager nach Anspruch 1 bis 7, dadurch gekennzeichnet, daß das Stützelement (5) durch das erste Federelement (1) gebildet ist.

## Claims

1. A controllable engine mount, composed of a supporting bearing (3) and of a rest bearing (4) which are supported on one another, parallel to one another, by a first spring element (1), composed of rubber and of annular design, and a second spring element (2) made from rubber, one of the spring elements being blockable, as required, by an auxiliary means (5), characterised in that the first spring element (1) has an inside diameter which is larger than the outside diameter of the second spring element (2), in that the first spring element (1) overlaps the second spring element (2) at least partially in the axial direction, in that the auxiliary means consists of a support element (5) which surrounds the second spring element (2) at least partially with a radial spacing, and in that the second spring element (2) has a cavity (6) which has an extent and position in the axial direction which are essentially coincidental with the support element (5), in that a flowable medium (7) can be fed into the cavity (6) or into the space formed in the said radial spacing between the support element (5) and the second spring element (2), and in that the second spring element (2) can be inflated in the region of the cavity (6) in dependence on the particular pressure of the medium (7) and can be laid immovably against the support element (5).

2. An engine mount according to claim 1, characterised in that the support element (5) is composed of an inflexible sleeve.

3. An engine mount according to claim 1, characterised in that the flowable medium (7) can be loaded with a pressure exceeding the atmospheric pressure.

4. An engine mount according to claim 1, characterised in that the medium (7) can be loaded with a pressure falling below the atmospheric pressure, and in that the second spring element (2) can thereby be shrunk and removed at least partially from the support element (5).

5. An engine mount according to any of claims 1 to 4, characterised in that the support element (5) on one side engages under the second spring element (2) in a pot-shaped manner and is provided with a circumferential wall (5.1), which is widened cylindrically in its diameter in the region of a portion of the projecting end.

6. An engine mount according to claim 5, characterised in that the axial extent of the section widened cylindrically in its diameter is approximately 0.3 - 0.5 times as large as the axial length of the support element (5).

7. An engine mount according to any one of claims 1 to 6, characterised in that the first spring element (1) has a barrel-shaped design.

8. An engine mount according to any of claims 1 to 7, characterised in that the support element (5) is formed by the first spring element (1).

## Revendications

1. Support de moteur réglable, se composant d'un organe de support (3) et d'un organe d'appui (4), qui sont appuyés l'un sur l'autre et parallèlement entre eux par un premier élément formant ressort (1) composant de caoutchouc et ayant une forme annulaire, et par un second élément formant ressort (2) en caoutchouc, un des éléments formant ressort pouvant être bloqué si nécessaire par un moyen auxiliaire (5), caractérisé en ce que le premier élément formant ressort (1) a un diamètre intérieur qui est plus grand que le diamètre extérieur du second élément formant ressort (2), le premier élément formant ressort (1) recouvre au moins en partie le second élément formant ressort (2) dans une direction axiale, le moyen auxiliaire se compose d'un élément de soutien (5) qui entoure au moins en partie et avec espacement radial le second élément formant ressort (2) et ce second élément formant ressort (2) comporte une cavité (6) qui a en direction axiale une dimension et une position correspondant dans l'essentiel à l'élément d'appui (5), un agent coulant (7) peut être stocké dans la cavité (6) ou dans le volume, créé dans l'intervalle d'espacement radial précité entre l'élément de soutien (5) et le second élément formant ressort (2), et le second élément formant ressort (2) peut être dilaté dans la zone de la cavité (6) en fonction de la pression correspondante de l'agent (7) et peut être appliqué de façon irréversible contre l'élément de soutien (5).

2. Support de moteur selon la revendication 1, caractérisé en ce que l'élément de soutien (5) se compose d'un fourreau non flexible.

3. Support de moteur selon la revendication 1, caractérisé en ce que l'agent coulant (7) peut être sollicité par une pression supérieure à la pression atmosphérique.

4. Support de moteur selon la revendication 1, caractérisé en ce que l'agent (7) peut être sollicité par une pression inférieure à la pression atmosphérique et en ce que le second élément formant ressort (2) peut ainsi subir un rétrécissement et peut sortir, au moins en partie, de l'élément de soutien (5).

5. Support de moteur selon une des revendications 1 à 4, caractérisé en ce que l'élément de soutien (5) est accroché d'un côté en forme de pot en-dessous du second élément formant ressort (2) et pourvu d'une paroi périphérique (5.1), qui est pourvu d'un élargissement diamétral cylindrique dans une partie de l'extrémité dépassante.

6. Support de moteur selon la revendication 5, caractérisé en ce que la dimension axiale de la partie pourvue d'un élargissement diamétral cylindrique a une grandeur comprise entre environ 0,3 et 0,5 fois la longueur axiale de l'élément de soutien (5).

7. Support de moteur selon une des revendications 1 à 6, caractérisé en ce que le premier élément formant ressort (1) a un profil en forme de tonneau.

8. Support de moteur selon une des revendications 1 à 7, caractérisé en ce que l'élément de soutien (5) est constitué par le premier élément formant ressort (1).
